Europäisches Patentamt

European Patent Office

Office européen des brevets

(11) Publication number: **0 360 377**
**A1**

# EUROPEAN PATENT APPLICATION

(21) Application number: **89304559.1**

(22) Date of filing: **02.05.89**

(51) Int. Cl.⁵: **B64D 10/00 , A62B 17/00**

(30) Priority: **03.05.88 GB 8810405**
**03.05.88 GB 8810406**

(43) Date of publication of application:
**28.03.90 Bulletin 90/13**

(84) Designated Contracting States:
**ES GR**

(71) Applicant: **THE SECRETARY OF STATE FOR DEFENCE IN HER BRITANNIC MAJESTY'S GOVERMENT OF THE UNITED KINGDOM OF GREAT BRITAIN AND NORTHERN IRELAND Whitehall London WC1A 2HB(GB)**

(72) Inventor: **Aplin,Judy Esther**
**3 Ashmore Cottages, St Catherine's Road Frimley Green,Camberley Surrey GU16 5NP(GB)**
Inventor: **Connett,Christopher Alan**
**6 Beaumont Grove**
**Aldershot Hampshire GU11 1YH(GB)**
Inventor: **Hay,Alfred Elgar**
**"The Haven" Littleworth Road, Sands Farnham Surrey GU10 1NE(GB)**

(74) Representative: **Beckham, Robert William et al Procurement Executive Ministry of Defence Patents 1A(4), Room 2014 Empress State Building Lillie Road London SW6 1TR(GB)**

(54) Protective garments for aircrew.

(57) A double-walled inflatable garment for aircrew providing protection against the adverse effects of high levels of acceleration and of high altitude flight. The inner wall is made from an extensible fabric and the outer wall from an inextensible fabric. One embodiment comprises a pair of trousers (14) incorporating protection for the feet (12) which can be worn over flying overalls. pressurised gas is admitted via a pipe (28) located in the abdominal region. Adjustment means in the form of lacing cords (21, 22) are provided so that the garment may be adjusted for a comfortable fit. A second embodiment comprises a sleeveless vest for supporting the chest of the wearer particularly under positive pressure breathing conditions.

Fig.7

## PROTECTIVE GARMENTS FOR AIRCREW

This invention relates to improvements in aircrew clothing for protection against some of the adverse physiological effects of high levels of acceleration and of high altitude flight. When flying at altitudes in excess of 10,000 ft it is normally necessary for aircrew to use oxygen breathing equipment and at very high altitudes or under conditions of high acceleration positive pressure breathing apparatus is employed. In the latter case, over-inflation of the lungs and resulting acute discomfort can occur if the chest is not supported by some external device.

During high and/or prolonged acceleration there is the additional requirement for a pressure aid to assist in supplying blood to the head and preventing pooling of the blood in the lower regions of the body. One known form of pressure aid (usually called a 'g' garment) comprises tight-fitting double-walled trousers enclosing five inflatable bladders between an inner and an outer wall of the trousers. The bladders cover the calves, thighs and abdomen, ie the soft body-tissue areas most prone to pooling of the blood, and are interconnected by flexible pipes. Inflation of the bladders is controlled by a 'g' sensitive valve which opens automatically and fills the bladders to an increasing pressure for increasing acceleration. This particular garment is very bulky and heavy and has the further disadvantage of providing no protection for the feet.

The present invention provides a structure for such protective garments which overcomes the aforementioned disadvantages of the prior art, which can be donned easily and quickly and which has minimum weight and bulk.

The invention comprises a protective inflatable garment for aircrew characterised in that the garment is of double-walled construction having an inner wall made from an extensible fabric and an outer wall made from an essentially inextensible fabric and incorporating a gas inlet.

Preferably, the inner, extensible wall is a butyl rubber-nylon-butyl rubber laminate and the outer wall, a nylon-butyl rubber-nylon laminate. These materials have the advantage of being impermeable to many toxic substances.

The garment may be provided with inflation restraints comprising short tags of fabric connecting the inner and outer walls in the regions of the chest, back or abdomen.

One embodiment of the invention covers the chest and back of the wearer, thereby providing a vest for supporting the chest under positive-pressure breathing conditions. It can be inflated via the gas inlet which may be positioned on the chest portion and connected via a hose and a gas flow control valve to the aircraft's breathing gas supply. The valve may be mounted at the gas inlet and affixed to the vest or it may be positioned further upstream. In either case, inflation may then be controlled by an altitude sensor or an acceleration-sensing control of a breathing gas regulator so that the vest is inflated only when flight conditions dictate that aircrew chest support is necessary. In the event of cabin pressure failure and in order to prevent over-inflation of the vest, gas may be exhausted rapidly via a differential pressure valve mounted on the front of the vest.

Alternatively, the vest is inflatable over the front of the wearer's torso only. The back panel is then made of a single wall of inextensible material, preferably a nylon-butyl rubber-nylon laminate. Although this version provides rather less support for the rib-cage, it has the advantage of a shorter inflation time.

The vest may be donned by passing it over the head and the girth may be adjusted for a comfortable fit by means of lacing cords. The chords are located down one or both sides of the vest from armpit to waist and pass through either loops of fabric or low friction eyelets or hooks.

Alternatively, the vest is openable down the front and closed by means of a zip fastener. Adjustment for a good fit is made by means of lacing cords located down both sides of the vest.

Alternatively, the vest is openable at one shoulder and down one side from armpit to waist and fastened by means of overlapping joints fitted with touch and close fasteners. This arrangement can be donned and adjusted for a comfortable fit more quickly that that comprising a lacing cord adjustment.

A second embodiment of the invention extends from the waist to the ankles, and covers each leg separately and may be extended beyond the ankles to include protection for the feet. Hence full cover 'g' trousers are provided which allow an improved tolerance of the wearer to high 'g' levels compared with that provided by garments comprising discrete bladders. A further advantage is the considerable saving in weight and bulk. Furthermore the inflation time of the trousers is much reduced as the influx of gas is no longer impeded by the existence of interconnecting pipes.

Inflation of the trousers is controlled by conventional means sensitive to the onset of high levels of acceleration. Pressurised gas is fed into the trousers via the gas inlet which may be positioned, conveniently, either in the abdominal area or around the ankle.

Preferably, some form of adjustment down each outside leg from the waist to the ankle is provided. This can take the form of a zip fastening arrangement comprising a primary half-zip fastener track and several secondary half-zip fastener tracks, spaced from and parallel to the primary track. Alternatively, or in addition, there may be provided lacing cords passing through low friction eyelets.

To aid mobility and comfort it is preferable to provide an articulated joint at the knee. This may take the form of a series of darts.

Part of the inner wall in the region of the buttocks may be cut away so that no inflation can occur at this location. Thus there is no possibility of the wearer being pushed upwards and away from his seat when the trousers are inflated. The presence of the outer fabric in this region, if made to be a snug fit, has been found to prevent haemorrhaging of the flesh in this area. This feature imparts a further advantage to the present invention as hitherto, garments of this type covered the buttocks with a mesh which offered very little support or protection.

Two embodiments of the invention will now be described, by way of example only, with reference to the drawings of which:

Figure 1 is a front view of a vest constructed in accordance with the invention,

Figure 2 is a side view of a valve arrangement suitable for use with the vest of Figure 1,

Figure 3 is an exploded view of a valve panel incorporated with the vest of Figure 1,

Figure 4 is a plan view of the vest opened out,

Figure 5 and 6 show two types of seam used for joining inner and outer walls of the vest,

Figure 7 shows a side view of a pair of trousers constructed in accordance with the invention, and

Figure 8 shows the adjustment means of Fig 7 in closer detail.

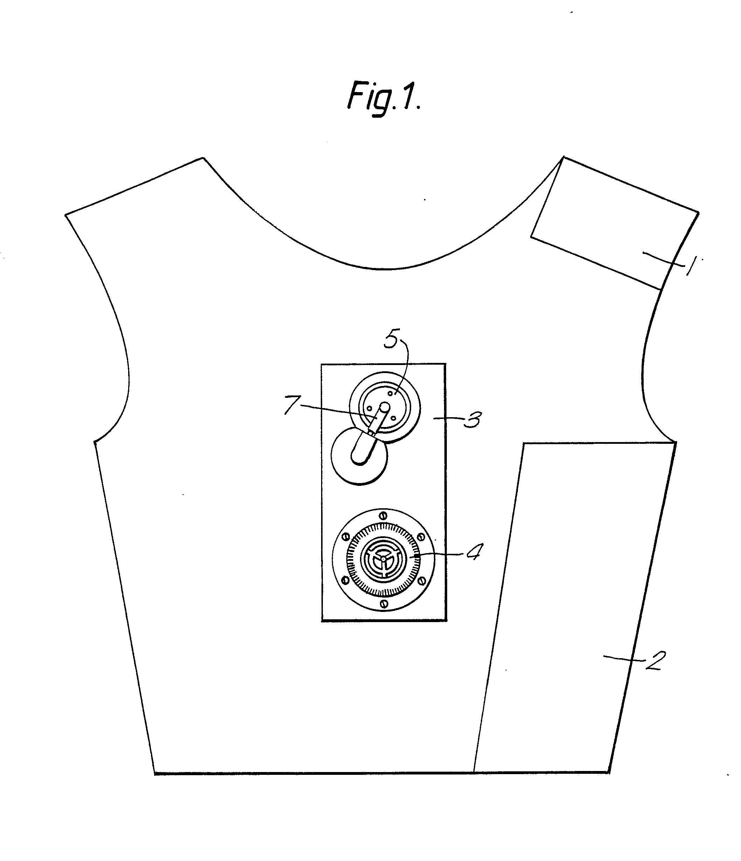

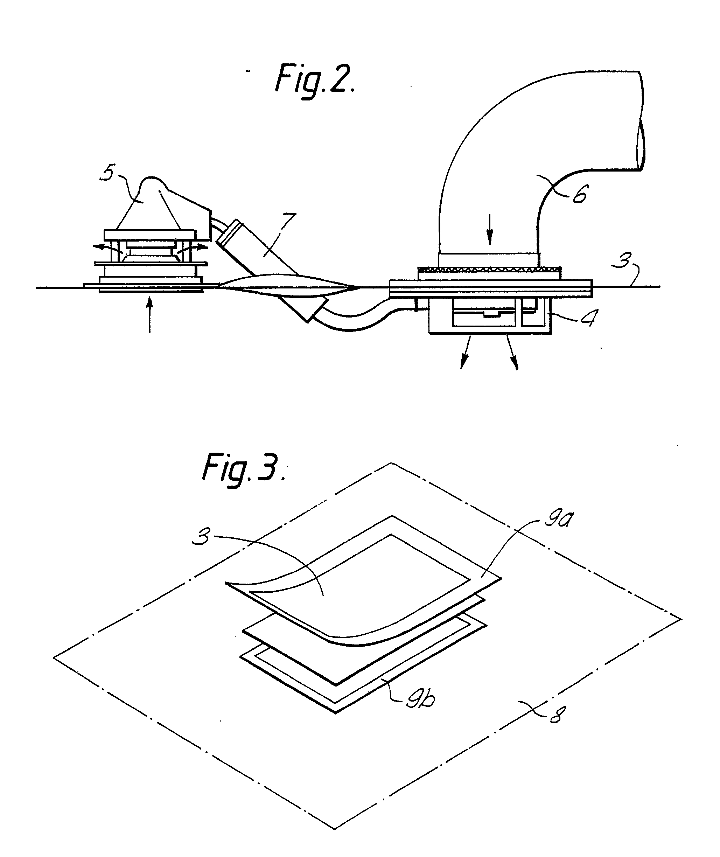

Figure 1 shows a protective, sleeveless vest which is of double-walled construction, the inner wall comprising an extensible butyl-rubber-nylon-butyl rubber laminate and the outer wall comprising an inextensible nylon-butyl rubber-nylon laminate. The vest is tapered from arm-pit to waist and is openable at the shoulder and down one side so that it may be donned easily and quickly. An overlapping shoulder flap 1 and side flap 2 are fitted with touch and close fasteners. A valve panel 3 is located centrally on the front of the vest and carries a valve arrangement which allows gas from the aircraft breathing gas supply to be admitted into and exhausted from the vest. The valve arrangement is shown in greater detail in Figure 2 and comprises an inlet non-return valve 4 and a differential pressure valve 5. Attached to the inlet valve is a hose 6 which enables connection of the vest to an aircraft's breathing gas supply (not shown). The necessary connection between the two valves 4, 5 is made by means of a rubber hose 7 which penetrates the valve panel 3.

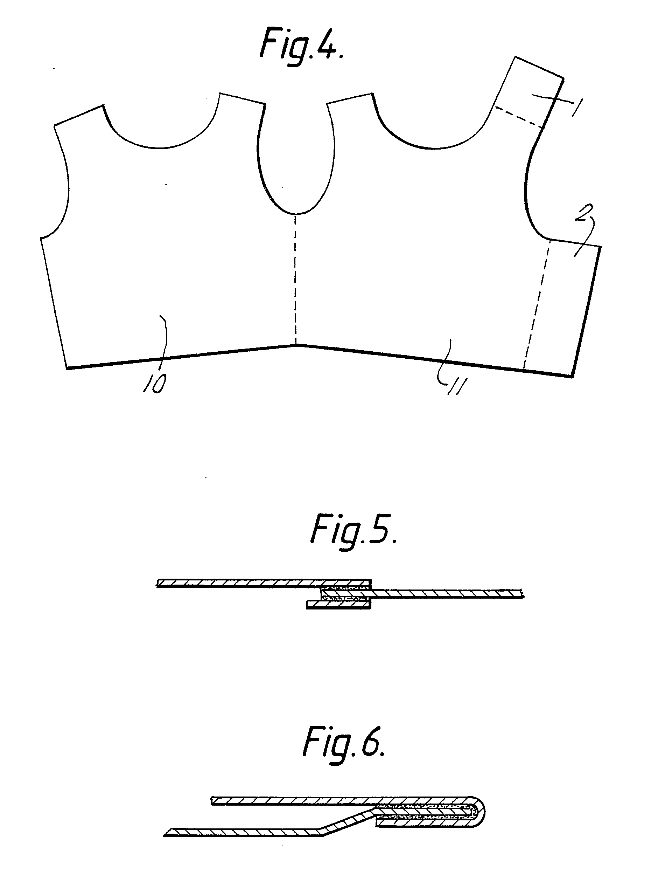

The arrows shown in Figure 2 indicate the direction of gas flow. The valve panel 3 can be removed easily to facilitate maintenance of the valve arrangement, should this be necessary. Referring to Figure 3, the valve panel 3 is made from nylon-butyl rubber nylon material and is sealed in place on the outer wall 8 of the vest using two sealing patches 9a, 9b. The sealing patches are made from a butyl rubber-nylon-butyl-rubber laminate and all the overlapping joints are secured with a suitable bonding agent. Openings (not shown) are made in the panel to accommodate the valve arrangement.

Figure 4 shows the inside front panel 10 and back panels 11 which are made from the extensible laminate. The shoulder and side flaps 1 and 2 are not inflatable. All the seams of the vest are bonded together so that they are gas-tight. To ensure flexibility and comfort, the shoulder seams are made in the manner depicted by Figure 5 and all other seams are constructed in the manner depicted by Figure 6.

In use by aircrew, firstly all conventional socks and underwear are donned followed by the flying overalls and protective 'g' trousers. Then the vest is donned and the necessary adjustments are made to ensure a comfortable fit by adjusting the amount of overlap of the shoulder and side flaps 1 and 2. Subsequently, boots, life preserver, helmet and respiration supply are donned as appropriate. Once the wearer is positioned in an aircraft, the hose 6 is connected to the aircraft's breathing gas supply. The vest remains uninflated until an altitude sensor triggers the positive pressure breathing apparatus and a gas-flow control mechanism so that gas may be admitted into the vest under pressure. The altitude sensor and gas-flow control mechanism are comprised of conventional equipment and will not be described in detail herein as they form no part of the claimed invention. As gas is admitted via the inlet valve 4, the vest inflates, the inner extensible wall being forced against the wearer's back and chest whilst the outer inextensible wall supports the vest.

Thus the entire rib-cage of the wearer is supported, his lungs are prevented from over-inflation and furthermore, the additional external pressure provided by the vest helps him to exhale.

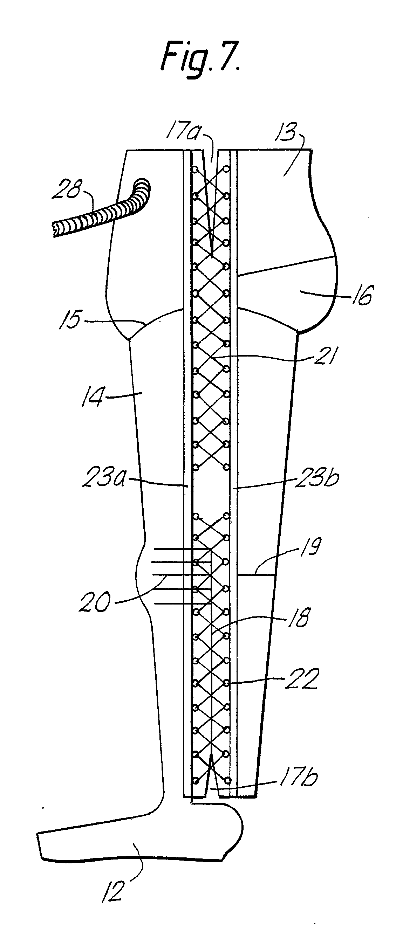

The second embodiment of Fig 7 comprises a pair of trousers, each trouser leg incorporating a foot portion 12 which covers the foot except for the toe and heel and fastens underneath the sole by means of a touch and close fastener. The trousers (including the foot portion 12) are of double-walled construction, the inner wall being a butyl rubber-nylon-butyl rubber laminate and the outer wall being a nylon-butyl rubber-nylon laminate. A top portion 13 and a leg portion 14 are joined by a seam 15. A panel 16 in the inner wall is cut away so that the trousers cannot be inflated in this region. Slits positioned on one side of the waist 17a and at each ankle 17b enable the garment to be easily donned. A seam extends from the crotch down to the ankle on the inside of each leg and from the knee down to the ankle on the outside of each leg 18.

A seam 19 at the back of each knee and a series of darts 20 in the region of the knee-cap aid the wearer's mobility. All seams are stiched and bonded together so that they are adequately gas-tight.

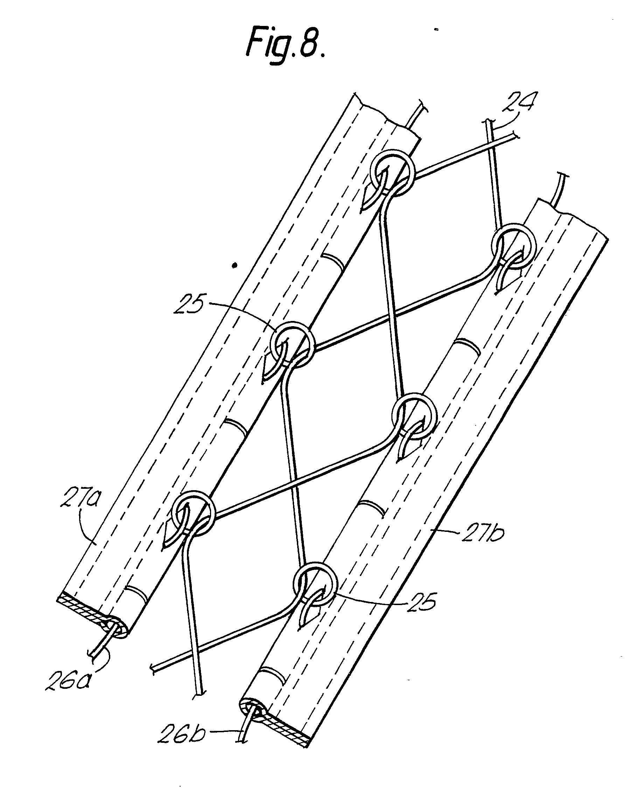

Adjustment means 21 and 22 accommodate the variations in leg girth from thigh to ankle and are shown in greater detail in Fig 8. Folded strips of nylon 23a and 23b are stitched down the outside of each leg and the outer and inner wall girths are adjusted simultaneously by pulling the ends of a nylon lacing cord 24. The lacing cord is located by a series of metal rings 25 which are attached to the nylon strip by means of further nylon cords 26a and 26b extending through the folded strips 27a and 27b.

In use, by aircrew, firstly all conventional socks and underwear are donned. Then the trousers are donned and fastened under the foot by means of an overlapping joint under the sole. Adjustment is subsequently made to leg girth so that the trousers are a comfortable fit. Finally boots and flying overalls are put on over the trousers, followed by life-preserver, helmet and respiration supply as appropriate. Once the wearer is positioned in his aircraft, he connects the trousers to a remotely controllable gas supply apparatus via a gas inlet and hose 28 which communicates with the aircraft cabin via an opening in the flying overalls. The trousers remain uninflated until a 'g' sensitive valve opens and admits gas under pressure into the trousers. The gas supply apparatus is entirely conventional and does not comprise any part of the present invention and therefore will not be described herein. As the trousers inflate, the inner extensible wall is forced against the wearer's body whilst the outer inextensible wall supports the garment. When acceleration diminishes and the 'g', valve closes, gas already inside the trousers is vented back through the hose 28, thereby allowing the trousers to deflate. Inflation around the abdomen is restricted by the provision of short tags of fabric which interconnect the inner and outer walls in this region. This provision has been found to contribute to the comfort of the wearer.

Alternatively, the trousers may be worn over the flying overalls.

It will be appreciated that various changes may be made in the form, details, proportions and arrangements of the several parts of the garments described without departing from the scope of the invention. Furthermore, either the vest, or the trousers, or both may be worn depending on the protection thought desirable for the aircrew.

## Claims

1. A protective inflatable garment for aircrew characterised in that, the garment is of double-walled construction having an inner wall made from an extensible fabric and an outer wall made from an essentially inextensible fabric and incorporating a gas inlet.

2. A garment as claimed in claim 1 in which the inner wall is a butyl rubber-nylon-butyl rubber laminate.

3. A garment as claimed in claim 1 or claim 2 in which the outer wall is a nylon-butyl rubber-nylon laminate.

4. A garment as claimed in any preceding claim incorporating inflation restraints comprising short tags of fabric connecting the inner and outer walls in the regions of the chest, back or abdomen.

5. A garment as claimed in any preceding claim covering the torso and having a chest portion (10) and a back portion (11), the chest portion being inflatable and of double-walled construction.

6. A garment as claimed in claim 5 in which the back portion (11) is inflatable and double-walled construction.

7. A garment as claimed in claim 5 or claim 6 incorporating a gas inlet valve (4) located on the chest portion (10) for admitting gas into the garment at a pressure related to the pressure of breathing gas supplied to the wearer.

8. A garment as claimed in claim 7 incorporating a differential pressure valve (5) mounted on the chest portion (10) and operable when a maximum presssre difference between the garment interior and exterior is exceeded.

9. A garment as claimed in any of claims 5 to 8 incorporating girth adjustment means comprising lacing cords which pass through low-friction eyelets located down at least one side of the garment.

10. A garment as claimed in any of claims 5 to 8 which is openable at one shoulder and down one side and fastenable by means of overlapping joints (1, 2).

11. A garment as claimed in any of claims 1 to 4 which extends from the waist to the ankles and covers each leg separately.

12. A garment as claimed in claim 11 in which the gas inlet is located in the abdominal region.

13. A garment as claimed in claim 11 in which the gas inlet is located in the region of the ankle.

14. A garment as claimed in any of claims 11 to 13 incorporating extensions beyond each ankle in the form of double-walled inflatable foot portions (12) which fasten under the sole by means of an overlapping joint.

15. A garment as claimed in any of claims 11 to 14 including leg-girth adjustment means extending from the waist to the ankle and comprising a primary half zip fastener track and several secondary half zip fastener tracks spaced from and parallel to the primary track.

16. A garment as claimed in any of claims 11 to 14 including leg-girth adjustment means (21, 22) extending from the waist to the ankle and comprising lacing cords (24) passing through low-friction eyelets (25).

17. A garment as claimed in any of claims 11 to 16 including an articulated knee joint in the form of a series of darts (20).

18. A garment as claimed in any of claims 11 to 17 in which part of the garment in the region of the buttocks (16) is of a single-walled construction so that inflation is prevented in said region.

*Fig.1.*

*Fig.2.*

*Fig.3.*

*Fig.4.*

*Fig.5.*

*Fig.6.*

Fig.7.

# Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 158 149 (GRAY)<br>* Column 2, lines 15-26; column 3, lines 33-65 * | 1,5-8 | B 64 D 10/00<br>A 62 B 17/00 |
| A | FR-A-2 430 886 (ETUDES ET FABRICATIONS AERONAUTIQUES)<br>* Claim 1 * | 4 | |
| A | CA-A-1 170 402 (STEFFLER)<br>* Page 9, lines 5-19; page 8, lines 11-15; page 9, lines 2-5 * | 1,7,9,10 | |
| A. | AU-A-3 054 967 (FRANKENSTEIN GROUP LTD)<br>* Claims 1-3 * | 11,12,15-17 | |
| A | GB-A-2 055 287 (SHARP)<br>* Page 1, lines 65-86 * | 2 | |
| A | US-A-4 674 479 (JENNINGS)<br>* Whole document * | 1,11,12 | TECHNICAL FIELDS SEARCHED (Int. Cl.4) |
| A | US-A-3 392 405 (RITZINGER)<br>* Whole document * | 1 | B 64 D<br>A 62 B<br>A 41 D |

The present search report has been drawn up for all claims

| Place of search | Date of completion of the search | Examiner |
|---|---|---|
| THE HAGUE | 16-08-1989 | HAUGLUSTAINE H.P.M. |